# EUROPEAN PATENT SPECIFICATION

(11) **EP 3 833 080 B1**
(45) Date of publication and mention of the grant of the patent: **17.12.2025**
(21) Application number: 19844641.1
(22) Date of filing: 26.07.2019
(51) Int. Cl.: H04W 24/08, H04W 52/02, H04W 48/12

(54) **INFORMATION RECEIVING METHOD AND TERMINAL**
INFORMATIONSEMPFANGSVERFAHREN UND TERMINAL
PROCÉDÉ DE RÉCEPTION D'INFORMATIONS ET TERMINAL

(30) Priority: 01.08.2018 CN 201810866195
(43) Date of publication of application: 09.06.2021
(73) Proprietor: VIVO MOBILE COMMUNICATION CO., LTD., Dongguan, Guangdong 523860 (CN)
(72) Inventor: WU, Yumin, Dongguan, Guangdong 523860 (CN); BAO, Wei, Dongguan, Guangdong 523860 (CN)
(74) Representative: Winter, Brandl - Partnerschaft mbB
(86) International application number: PCT/CN2019/097863
(87) International publication number: WO 2020/024876

(56) References cited:
- WO-A1-2017/211682
- CN-A- 101 534 516
- CN-A- 102 026 373
- CN-A- 102 421 148
- CN-A- 102 595 565
- CN-A- 103 428 855
- ERICSSON: "Calculation of Paging Occasions", vol. RAN WG2, no. Busan, South Korea; 20180521 - 20180525, 20 May 2018 (2018-05-20), XP051443259, Retrieved from the Internet <URL:http://www.3gpp.org/ftp/Meetings%5F3GPP%5FSYNC/RAN2/Docs/> [retrieved on 20180520]

## Description

### TECHNICAL FIELD

This disclosure relates to the field of communications technologies, and in particular, to an information receiving method, a terminal, and a computer-readable storage medium.

### BACKGROUND

In an unlicensed frequency band, before transmitting a signal, a transmission terminal needs to monitor whether the frequency band is occupied, and the transmission terminal can transmit the signal if the frequency band is not occupied.

Content of a paging (paging) message is mainly used to indicate an update of system information and an arrival of a terminal service.

A terminal UE (User Equipment) in an idle (idle) or inactive (inactive or deactivated) state receives a paging message in a DRX (Discontinuous Reception, discontinuous reception) mode. Position information for receiving the paging message by the terminal includes:
PF (Paging Frame, paging frame): PF is one radio frame number, and may include one or more POs; and
PO (Paging Occasion, paging occasion): PO is a number of one subframe. In the subframe, a P-RNTI (Paging Radio Network Temporary Identity, paging radio network temporary identity) in a PDCCH (Physical Downlink Control Channel, physical downlink control channel) is used to schedule a paging message.

Positions of the PF and PO are obtained through calculation by the terminal based on a UE_ID (such as an IMSI or an International Mobile Subscriber Identity, international mobile subscriber identity) of the terminal. A DRX cycle for receiving the paging message by the terminal is determined by the shortest of a paging cycle broadcast in the system information and a terminal-specific paging cycle.

During transmission of a paging message on the unlicensed frequency band, because a PO position on the channel may be occupied and the paging message cannot be transmitted, the terminal needs to continuously monitor the PO position for a period of time, so as to ensure that the paging message can be received by the terminal.

To sum up, if the terminal continuously monitors a transmit position of the paging message for a period of time, even if the network side does not transmit the paging message to the terminal, the terminal still needs to continuously monitor the paging message, thereby increasing power consumption and electric energy consumption of the terminal. Likewise, a principle for receiving system information and/or DRX information by the terminal is the same as a principle for receiving the paging message by the terminal, and the power consumption and electric energy consumption of the terminal can also be increased.

WO2017/211682A1 provides a method for detecting a paging message, which includes: detecting at a UE a downlink transmission in a selected cell of a mobile communication system within a paging occasion window including two or more transmission time intervals, where the downlink transmission is subject to a clear channel assessment procedure, determining a paging detection window including one or more transmission time intervals within the paging occasion window relative to the beginning of the detected downlink transmission, and monitoring the downlink transmission for receiving a paging message to the UE for the duration of the paging detection window or until the paging message is received, whichever occurs first.

"Calculation of Paging Occasions" (R2-1806805; 3GPP TSG-RAN WG2 #102, 20 May 2018; Ericsson) discusses the NR paging, in particular how paging occasions can be distributed in time and frequency in the NR cell, and the need to clarify the timing requirements on paging occasions in relation to SS Block transmissions is also urged.

### SUMMARY

This disclosure, as defined in the appended claims, provides an information receiving method and a terminal, so as to resolve a prior-art problem of increasing power consumption of the terminal because the terminal receives partial downlink information in a continuous monitoring manner.

The scope of the present invention is determined only by the scope of the appended claims. More precisely, in one aspect, the present invention provides an information receiving method according to claim 1 and further detailed in the dependent claims referring back to this claim. A corresponding terminal is provided in claim 7.

In another aspect, the present invention provides a computer-readable storage medium according to claim 13.

### BRIEF DESCRIPTION OF DRAWINGS

To describe the technical solutions in the embodiments of this disclosure more clearly, the following briefly describes the accompanying drawings required for describing the embodiments of this disclosure. Apparently, the accompanying drawings in the following description show merely some embodiments of this disclosure, and the scope of this disclosure is defined by the appended claims.
FIG. 1 is a schematic architectural diagram of a wireless communications system;
FIG. 2 is a flowchart of steps of an information receiving method according to an embodiment of this disclosure;
FIG. 3 is a schematic flowchart of steps of an information transmission method;
FIG. 4 is a schematic diagram of a principle of applying an information receiving method provided by an embodiment of this disclosure to a non-multi-beam scenario;
FIG. 5 is a schematic diagram of a principle of applying an information receiving method provided by an embodiment of this disclosure to a multi-beam scenario;
FIG. 6 is a schematic structural diagram 1 of a terminal according to an embodiment of this disclosure;
FIG. 7 is a schematic structural diagram 2 of a terminal;
FIG. 8 is a schematic structural diagram 3 of a terminal; and
FIG. 9 is a schematic structural diagram of a network-side device.

### DESCRIPTION OF EMBODIMENTS

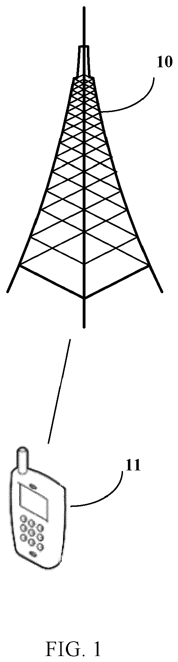

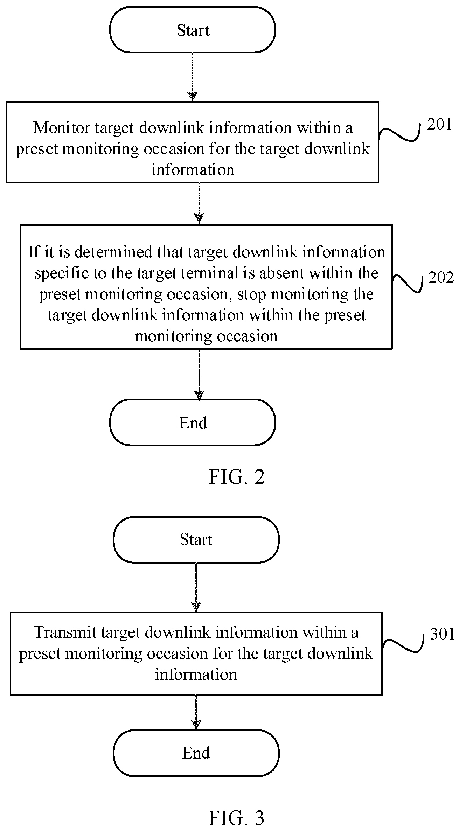

The following clearly and completely describes the technical solutions in the embodiments of this disclosure with reference to the accompanying drawings in the embodiments of this disclosure. Apparently, the described embodiments are some rather than all of the embodiments of this disclosure. In the following, the embodiments referring to FIGS. 1-2 and 4-6 are according to the claimed invention, whereas the embodiments referring to FIGS. 3 and 7-9 are not according to the invention and are present for illustration purpose only.

In the embodiments of this disclosure, terms such as "an example" or "for example" are used to represent examples, illustrations, or explanations. Any embodiment or design scheme described as "an example" or "for example" in the embodiments of this disclosure should not be construed as being more preferred or having more advantages than other embodiments or design schemes. Specifically, the terms such as "an example" or "for example" are intended to present related concepts in a specific manner.

The following describes the embodiments of this disclosure with reference to the accompanying drawings. An information receiving method, an information transmission method, a terminal, and a network-side device provided by the embodiments of this disclosure can be applied to a wireless communications system. The wireless communications system may be a fifth generation (5G) system, or an evolved long term evolution (Evolved Long Term Evolution, eLTE) system, or a later evolved communications system. FIG. 1 is a schematic architectural diagram of a wireless communications system according to an embodiment of this disclosure. As shown in FIG. 1, the wireless communication system may include: a network-side device 10 and a terminal (the terminal may also be referred to as user equipment), for example, the terminal is denoted as UE11. The UE11 may be connected to the network-side device 10. In practical applications, the connection between the foregoing devices may be a wireless connection. For ease of visually representing the connection relationships between the devices, a solid line is used for illustration in FIG. 1.

It should be noted that the foregoing communications system may include a plurality of UEs, and the network-side device may communicate (transmit signaling or data) with the plurality of UEs.

The network-side device 10 provided in this embodiment of this disclosure may be a base station, and the base station may be a base station commonly used, or may be an evolved NodeB (evolved node base station, eNB), or may be a network-side device (such as a next generation NodeB (next generation node base station, gNB) or a transmission and reception point (transmission and reception point, TRP) in a 5G system, or a cell.

The terminal provided in this embodiment of this disclosure may be a mobile phone, a tablet computer, a notebook computer, an ultra-mobile personal computer (Ultra-mobile Personal Computer, UMPC), a netbook, a wearable device (Wearable Device), an in-vehicle device, a personal digital assistant (Personal Digital Assistant, PDA), or the like. It should be noted that a specific type of the terminal is not limited in this embodiment of this disclosure.

As shown in FIG. 2, an embodiment of this disclosure provides an information receiving method. The method is applied to a target terminal and includes the following steps.

Step 201: Monitor target downlink information within a preset monitoring occasion for the target downlink information.

In this step, the target downlink information includes at least one of the following information: a paging message, system information, and discontinuous reception DRX information.

For example, when the target downlink information is a paging message, the preset monitoring occasion for the target downlink information is a time interval with a start time point being a paging occasion PO of the paging message. For another example, if duration of the preset monitoring occasion of the paging message at one PO position is 10ms, the terminal continuously monitors transmission of the paging message for 10ms from a start position of the PO, or the terminal performs monitoring in a preset mode for a partial time of the 10ms window from the start position of the PO.

Step 202: If it is determined that target downlink information specific to the target terminal is absent within the preset monitoring occasion, stop monitoring the target downlink information within the preset monitoring occasion.

In this step, that target downlink information specific to the target terminal is absent within the preset monitoring occasion includes at least the following two cases:

Case 1: The terminal can detect the target downlink information within the preset monitoring occasion, but the detected target downlink information is not the target downlink information specific to the target terminal. In other words, a network side does not transmit any target downlink information specific to the target terminal.

Case 2. The terminal fails to detect any target downlink information within the preset monitoring occasion. In other words, the network side does not transmit any target downlink information.

On one hand, in Case 1, the method provided in this embodiment of this disclosure further includes:
if target downlink information specific to the target terminal is absent among n pieces of target downlink information that are detected within the preset monitoring occasion, determining that target downlink information specific to the target terminal is absent within the preset monitoring occasion, where n is an integer greater than or equal to 1.

Specifically, if the target downlink information does not carry identification information of the target terminal, it indicates that the target downlink information is not specific to the target terminal; or if the target downlink information carries the identification information of the target terminal, it indicates that the target downlink information is specific to the target terminal.

For example, when the target downlink information is a paging message, the target terminal monitors a PDCCH (Physical Downlink Control Channel, physical downlink control channel) at the start position of the PO. If the PDCCH carries a P-RNTI (Paging Radio Network Temporary Identity, paging radio network temporary identity), the target terminal further receives the paging message according to an indication of the PDCCH. When n paging messages received by the target terminal carries no paging message with an identifier of the target terminal, the terminal stops monitoring the paging message within the preset monitoring occasion. For example, if the target terminal receives the n^{th} paging message, and none of the 1^{st} paging message to the n^{th} paging message received by the terminal carries the identifier of the target terminal, the target terminal stops receiving the paging message after receiving the n^{th} paging message. It should be noted that because the paging messages are transmitted periodically, that the target terminal stops receiving the paging message after receiving the n^{th} paging message specifically means: stopping receiving the paging message within the preset monitoring occasion corresponding to this cycle, and within a preset monitoring occasion of a next cycle, the terminal needs to restart monitoring the target downlink information.

As an embodiment of this disclosure, if the i^{th} target downlink information received by the target terminal is the target downlink information specific to the target terminal, the terminal also stops monitoring the target downlink information within the preset monitoring occasion, where i is a positive integer less than or equal to n.

In other words, in Case 1, when any one of the following conditions is met, the target terminal stops monitoring the target downlink information within the preset monitoring occasion:

Condition 1: Target downlink information specific to the target terminal is absent in the n pieces of target downlink information detected by the target terminal within the preset monitoring occasion.

Condition 2: The i^{th} target downlink information received by the target terminal is specific to the target terminal, and i is a positive integer less than or equal to n.

On the other hand, in Case 2, the method provided in this embodiment of this disclosure further includes:
if transmission indication information and scheduling information for the target downlink information are detected within the preset monitoring occasion before the target downlink information is detected, and the target downlink information is not scheduled by the scheduling information for the target downlink information, determining that target downlink information specific to the target terminal is absent within the preset monitoring occasion.

Specifically, the transmission indication information and the scheduling information for the target downlink information are carried on a downlink channel. If a resource block RB is not reserved or configured for the transmission of the target downlink information on the downlink channel, it indicates that the target downlink information is not scheduled by the scheduling information for the target downlink information, that is, a network-side device may not transmit the target downlink information.

For example, when the target downlink information is a paging message, the target terminal monitors the PDCCH at the start position of the PO. If the PDCCH carries the P-RNTI and scheduling information, but the paging message is not scheduled by the scheduling information (that is, no sufficient RBs are configured or reserved for the transmission of the paging message on the PDCCH), the target terminal stops monitoring the paging message within the preset monitoring occasion. It should be noted that because the paging message is transmitted periodically, the terminal needs to restart monitoring the PDCCH within the preset monitoring occasion of the next cycle, so as to further determine whether to continue monitoring the paging message or stop monitoring the paging message

Still using the foregoing example, in the foregoing embodiment of this disclosure, before step 201, the method further includes:
determining the preset monitoring occasion for the target downlink information based on reception configuration information for the target downlink information, where the reception configuration information for the target downlink information is configured by the network-side device or specified by the protocol.

As an embodiment, the reception configuration information for the target downlink information further includes a receiving period for the target downlink information and/or reception resource configuration information for the target downlink information.

For example, the target downlink information is a paging message, a receiving period for the target downlink information may be configured as 320ms, the preset monitoring occasion for the target downlink information may be configured as 10ms from the PO position, and the reception resource configuration information for the target downlink information is PDCCH resource configuration information.

It should be noted that the information receiving method provided by this embodiment of this disclosure can be applied to a non-multi-beam scenario (also referred to as a single-beam scenario) or a multi-beam scenario.

The non-multi-beam scenario specifically means that: the network-side device transmits the target downlink information on one beam, and correspondingly, the terminal monitors the target downlink information on the corresponding beam. The multi-beam scenario specifically means that: the network-side device separately transmits the target downlink information on two or more beams, and correspondingly, the terminal separately monitors the target downlink information on the two or more beams.

In the non-multi-beam scenario, because the target downlink information is transmitted to the terminal on only one beam by the network-side device, the reception resource configuration information for the target downlink information may not carry a beam identifier, or may carry a beam identifier (the beam identifier may be specifically indicated by using a reference signal identifier). In the multi-beam scenario, in order to identify reception resources of different beams, the reception resource configuration information for the target downlink information needs to carry each beam identifier and reception resource configuration information corresponding to each beam identifier.

That is, as an embodiment, when the reception configuration information for the target downlink information includes the reception resource configuration information for the target downlink information,
the reception resource configuration information for the target downlink information includes:
one or more reference signal identifiers; and
reception resource configuration information associated with each reference signal identifier.

For example, the reference signal identifier includes: an identifier of an SSB (Synchronous Signal Block, synchronous signal block) and/or an identifier of a CSI-RS (Channel State Information Reference Signal, channel state information reference signal).

Additionally, in the foregoing embodiment of this disclosure, the method further includes:
determining a value of n based on the configuration configured by the network-side device or the protocol specification.

Still using the foregoing example, in the foregoing embodiment of this disclosure, in the multi-beam scenario, the parameter n may be set for one beam, or may be set for a plurality of beams. In addition, the values of n for the reception resources associated with different reference signal identifiers (that is, different beams) are the same or different.

For example, the multi-beam scenario includes two beams, denoted by SSB1 and SSB2. n is separately set for SSB1 and SSB2. For example, a value of n corresponding to SSB1 is 1, and a value of n corresponding to SSB2 is 2; or the value of n corresponding to SSB1 is 1, and the value of n corresponding to SSB2 is also 1. Alternatively, one n is set for SSB1 and SSB, for example, the value of n corresponding to SSB1 and SSB2 is 3.

Correspondingly, in the foregoing embodiment of this disclosure, the determining, if target downlink information specific to the target terminal is absent among n pieces of target downlink information that are detected within the preset monitoring occasion, that target downlink information specific to the target terminal is absent within the preset monitoring occasion includes:
if target downlink information specific to the target terminal is absent among n pieces of target downlink information that are detected on resources associated with each of at least one reference signal identifier within the preset monitoring occasion, determining that target downlink information specific to the target terminal is absent within the preset monitoring occasion; in other words, if target downlink information specific to the target terminal is absent among n pieces of target downlink information detected on any one beam, determining that target downlink information specific to the target terminal is absent within the preset monitoring occasion; or
if target downlink information specific to the target terminal is absent among n pieces of target downlink information that are detected on resources associated with each reference signal identifier within the preset monitoring occasion, determining that target downlink information specific to the target terminal is absent within the preset monitoring occasion; in other words, if target downlink information specific to the target terminal is absent among n pieces of target downlink information detected on each beam, determining that target downlink information specific to the target terminal is absent within the preset monitoring occasion; or
if target downlink information specific to the target terminal is absent among n pieces of target downlink information that are detected on resources corresponding to a plurality of reference signal identifiers within the preset monitoring occasion, determining that target downlink information specific to the target terminal is absent within the preset monitoring occasion; in other words, if target downlink information specific to the target terminal is absent among n pieces of target downlink information detected on a plurality of beams, determining that target downlink information specific to the target terminal is absent within the preset monitoring occasion.

To sum up, in this embodiment of this disclosure, the terminal monitors the target downlink information within the preset monitoring occasion, and if the terminal determines that target downlink information specific to the terminal is absent within the preset monitoring occasion, the terminal stops monitoring the target downlink information within the preset monitoring occasion, thereby reducing power consumption of the terminal and saving electric energy of the terminal.

As shown in FIG. 3, an embodiment of this disclosure further provides an information transmission method. The method is applied to a network-side device and includes the following steps.

Step 301: Transmit target downlink information within a preset monitoring occasion for the target downlink information.

In this step, the target downlink information includes at least one of the following information: a paging message, system information, and discontinuous reception DRX information.

For example, when the target downlink information is a paging message, the preset monitoring occasion for the target downlink information is a time interval with a start time point being a paging occasion PO of the paging message. For another example, if duration of the preset monitoring occasion of the paging message at one PO position is 10ms, the network-side device transmits the paging message at any moment in the preset monitoring occasion, or the network-side device transmits the paging message in a preset mode.

Optionally, in the foregoing embodiment of this disclosure, the target downlink information carries identification information of a terminal to which the target downlink information is specific.

For example, the target downlink information is a paging message. If the paging message carries an identifier of a terminal 1, the paging message is specific to the terminal 1; if the paging message carries an identifier of a terminal 2, the paging message is specific to the terminal 2. During monitoring of the paging message, the terminal may receive the paging message specific to the terminal or paging messages specific to other terminals. The terminal may compare its own identifier with identifiers carried in the paging message to determine whether the paging message is specific to the terminal.

Still using the foregoing example, in the foregoing embodiment of this disclosure, before step 301, the method further includes:
configuring reception configuration information for the target downlink information for the terminal, where the reception configuration information for the target downlink information includes at least: indication information that indicates the preset monitoring occasion for the target downlink information.

As an embodiment, the reception configuration information for the target downlink information further includes a receiving period for the target downlink information and/or reception resource configuration information for the target downlink information.

For example, the target downlink information is a paging message, a receiving period for the target downlink information may be configured as 320ms, the preset monitoring occasion for the target downlink information may be configured as 10ms from the PO position, and the reception resource configuration information for the target downlink information is PDCCH resource configuration information.

It should be noted that the information transmission method provided by this embodiment of this disclosure can be applied to a non-multi-beam scenario (also referred to as a single-beam scenario) or a multi-beam scenario.

The non-multi-beam scenario specifically means that: the network-side device transmits the target downlink information on one beam, and correspondingly, the terminal monitors the target downlink information on the corresponding beam. The multi-beam scenario specifically means that: the network-side device separately transmits the target downlink information on two or more beams, and correspondingly, the terminal separately monitors the target downlink information on the two or more beams.

In the non-multi-beam scenario, because the target downlink information is transmitted to the terminal on only one beam by the network-side device, the reception resource configuration information for the target downlink information may not carry a beam identifier, or may carry a beam identifier (the beam identifier may be specifically indicated by using a reference signal identifier). In the multi-beam scenario, in order to identify reception resources of different beams, the reception resource configuration information for the target downlink information needs to carry each beam identifier and reception resource configuration information corresponding to each beam identifier.

That is, as an embodiment, when the reception configuration information for the target downlink information includes the reception resource configuration information for the target downlink information,
the reception resource configuration information for the target downlink information includes:
one or more reference signal identifiers; and
reception resource configuration information associated with each reference signal identifier.

For example, the reference signal identifier includes: an identifier of an SSB (Synchronous Signal Block, synchronous signal block) and/or an identifier of a CSI-RS (Channel State Information Reference Signal, channel state information reference signal).

Additionally, in the foregoing embodiment of this disclosure, the method further includes:
configuring a value of a parameter n for the terminal.

In the foregoing embodiment of this disclosure, in the multi-beam scenario, the parameter n may be set for one beam, or may be set for a plurality of beams. In addition, the values of n for the reception resources associated with different reference signal identifiers (that is, different beams) are the same or different.

For example, the multi-beam scenario includes two beams, denoted by SSB1 and SSB2. n is separately set for SSB1 and SSB2. For example, a value of n corresponding to SSB1 is 1, and a value of n corresponding to SSB2 is 2; or the value of n corresponding to SSB1 is 1, and the value of n corresponding to SSB2 is also 1. Alternatively, one n is set for SSB1 and SSB, for example, the value of n corresponding to SSB1 and SSB2 is 3.

To sum up, in the foregoing embodiment of this disclosure, the network-side device transmits the target downlink information within the preset monitoring occasion for the target downlink information, and configures the reception configuration information for the target downlink information for the terminal, thereby improving efficiency of monitoring the target downlink information by the terminal.

In order to more clearly describe the method provided in this embodiment of this disclosure, the following provides description in detail in combination with two examples:

### Example 1 (non-multi-beam scenario)

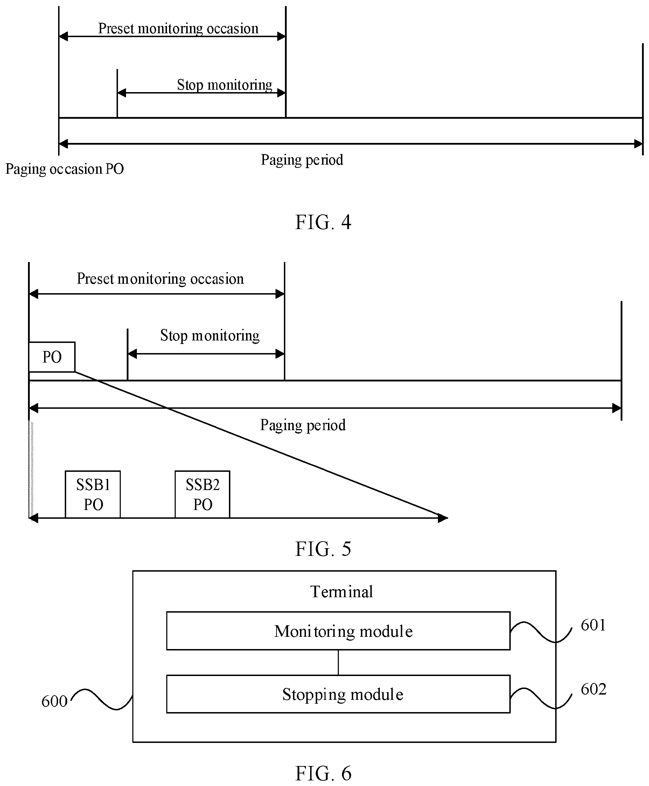

As shown in FIG. 4, assuming that the target downlink information is a paging message, a corresponding information receiving method is as follows:

Step 1: Determine the reception configuration information of the paging message based on the configuration configured by the network-side device or the protocol specification, where the reception configuration information of the paging message includes:
a receiving period of the paging message;
PDCCH resource configuration information corresponding to the paging message; and
related information of the preset monitoring occasion of the paging message.

Additionally, it is determined, based on the configuration configured by the network side or the protocol specification, that the parameter n is equal to 2.

Step 2: The terminal monitors the paging message within the preset monitoring occasion based on the reception configuration information in Step 1.

Step 3: When the terminal receives the 1^{st} or 2^{nd} paging message, if the 1^{st} paging message or the 2^{nd} paging message is specific to the terminal, the terminal stops monitoring the paging message within the preset monitoring occasion; otherwise, if the two paging messages received by the terminal do not include the paging message specific to the terminal, the terminal stops monitoring the paging message within the preset monitoring occasion.

### Example 2 (multi-beam scenario)

As shown in FIG. 5, assuming that the target downlink information is a paging message, a corresponding information receiving method is as follows:

Step 4: Determine the reception configuration information of the paging message based on the configuration configured by the network-side device or the protocol specification, where the reception configuration information of the paging message includes:
a receiving period of the paging message;
PDCCH resource configuration information corresponding to the paging message (an identifier of SSB1 and PDCCH resource configuration corresponding to SSB1, an identifier of SSB2, and PDCCH resource configuration corresponding to SSB2); and
related information of the preset monitoring occasion of the paging message.

Additionally, based on the configuration configured by the network side or the protocol specification, it is determined that the parameter n corresponding to SSB1 is 1, and the parameter n corresponding to SSB2 is 2; or the parameter n corresponding to both SSB1 and SSB2 is 2.

Step 5: The terminal monitors the paging message within the preset monitoring occasion based on the reception configuration information in Step 1.

Step 6: If one paging message received by the terminal on SSB1 is not specific to the terminal, and/or two paging messages received by the terminal on SSB2 are not specific to the terminal, the terminal stops monitoring the paging message within the preset monitoring occasion.

Alternatively, if the terminal receives a total of two paging messages, one on SSB1 and the other on SSB2, and neither of the two paging messages is specific to the terminal, the terminal stops monitoring the paging message within the preset monitoring occasion.

To sum up, in this embodiment of this disclosure, the terminal monitors the target downlink information within the preset monitoring occasion, and if the terminal determines that target downlink information specific to the terminal is absent within the preset monitoring occasion, the terminal stops monitoring the target downlink information within the preset monitoring occasion, thereby reducing power consumption of the terminal and saving electric energy of the terminal to achieve a power saving effect.

As shown in FIG. 6, an embodiment of this disclosure further provides a terminal 600, where the terminal is a target terminal, including:
a monitoring module 601, configured to monitor target downlink information within a preset monitoring occasion for the target downlink information; and
a stopping module 602, configured to: if it is determined that target downlink information specific to the target terminal is absent within the preset monitoring occasion, stop monitoring the target downlink information within the preset monitoring occasion.

In the foregoing embodiment of this disclosure, the terminal further includes:
a first determining module, configured to: if target downlink information specific to the target terminal is absent among n pieces of target downlink information that are detected within the preset monitoring occasion, determine that target downlink information specific to the target terminal is absent within the preset monitoring occasion, where n is an integer greater than or equal to 1.

In the foregoing embodiment of this disclosure, the terminal further includes:
a second determining module, configured to: if transmission indication information and scheduling information for the target downlink information are detected within the preset monitoring occasion before the target downlink information is detected, and the target downlink information is not scheduled by the scheduling information for the target downlink information, determine that target downlink information specific to the target terminal is absent within the preset monitoring occasion.

Optionally, in the foregoing embodiment of this disclosure, the terminal further includes:
an interval determining module, configured to determine the preset monitoring occasion for the target downlink information based on reception configuration information for the target downlink information, where the reception configuration information for the target downlink information is configured by a network-side device or specified by the protocol.

Optionally, in the foregoing embodiment of this disclosure, the reception configuration information for the target downlink information further includes a receiving period for the target downlink information and/or reception resource configuration information for the target downlink information.

Optionally, in the foregoing embodiment of this disclosure, when the reception configuration information for the target downlink information includes the reception resource configuration information for the target downlink information,
the reception resource configuration information for the target downlink information includes:
one or more reference signal identifiers; and
reception resource configuration information associated with each reference signal identifier.

Optionally, in the foregoing embodiment of this disclosure, the first determining module further includes:
a first determining submodule, configured to: if target downlink information specific to the target terminal is absent among n pieces of target downlink information that are detected on resources associated with each of at least one reference signal identifier within the preset monitoring occasion, determine that target downlink information specific to the target terminal is absent within the preset monitoring occasion; or
if target downlink information specific to the target terminal is absent among n pieces of target downlink information that are detected on resources associated with each reference signal identifier within the preset monitoring occasion, determine that target downlink information specific to the target terminal is absent within the preset monitoring occasion; or
if target downlink information specific to the target terminal is absent among n pieces of target downlink information that are detected on resources corresponding to a plurality of reference signal identifiers within the preset monitoring occasion, determine that target downlink information specific to the target terminal is absent within the preset monitoring occasion.

Optionally, in the foregoing embodiment of this disclosure, values of n for the reception resources associated with different reference signal identifiers are the same or different.

Optionally, in the foregoing embodiment of this disclosure, the terminal further includes:
a third determining module, configured to: determine the value of n based on the configuration configured by the network-side device or the protocol specification.

Optionally, in the foregoing embodiment of this disclosure, the target downlink information includes at least one of the following information:
a paging message, system information, and discontinuous reception DRX information.

The terminal provided by this embodiment of this disclosure can implement each process implemented by the terminal in the foregoing information receiving method embodiment. To avoid repetition, details are not described herein again.

To sum up, in this embodiment of this disclosure, the terminal monitors the target downlink information within the preset monitoring occasion, and if the terminal determines that target downlink information specific to the terminal is absent within the preset monitoring occasion, the terminal stops monitoring the target downlink information within the preset monitoring occasion, thereby reducing power consumption of the terminal and saving electric energy of the terminal to achieve a power saving effect.

It should be noted that the terminal provided in this embodiment of this disclosure is a terminal capable of executing the foregoing information receiving method, and all embodiments of the foregoing information receiving method are applicable to the terminal, with the same or similar beneficial effects achieved.

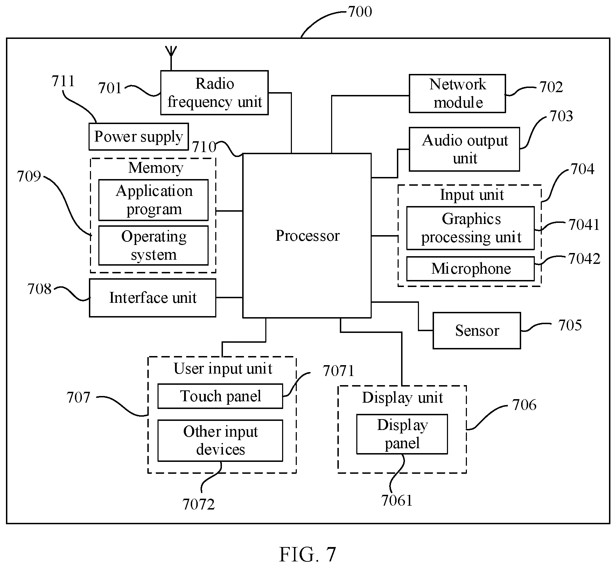

FIG. 7 is a schematic diagram of a hardware structure of a terminal for implementing the embodiments of this disclosure. The terminal 700 includes but is not limited to components such as a radio frequency unit 701, a network module 702, an audio output unit 703, an input unit 704, a sensor 705, a display unit 706, a user input unit 707, an interface unit 708, a memory 709, a processor 710, and a power supply 711. A person skilled in the art may understand that the structure of the terminal shown in FIG. 7 does not constitute a limitation on the terminal. The terminal may include more or fewer components than those shown in the figure, or a combination of some of the components, or a different arrangement of the components. In this embodiment of this disclosure, the terminal includes but is not limited to a mobile phone, a tablet computer, a notebook computer, a palmtop computer, an in-vehicle terminal, a wearable device, a pedometer, and the like.

The radio frequency unit 701 is configured to monitor target downlink information within a preset monitoring occasion for the target downlink information.

The processor 710 is configured to: if it is determined that target downlink information specific to the target terminal is absent within the preset monitoring occasion, stop monitoring the target downlink information within the preset monitoring occasion.

To sum up, in this embodiment of this disclosure, the terminal monitors the target downlink information within the preset monitoring occasion, and if the terminal determines that target downlink information specific to the terminal is absent within the preset monitoring occasion, the terminal stops monitoring the target downlink information within the preset monitoring occasion, thereby reducing power consumption of the terminal and saving electric energy of the terminal to achieve a power saving effect.

It should be noted that the terminal provided in this embodiment of this disclosure is a terminal capable of executing the foregoing information receiving method, and all embodiments of the foregoing information receiving method are applicable to the terminal, with the same or similar beneficial effects achieved.

It should be understood that in this embodiment of this disclosure, the radio frequency unit 701 may be configured to: receive and send signals in an information receiving/sending process or a call process; and specifically, after receiving downlink data from a base station, send the downlink data to the processor 710 for processing, and send uplink data to the base station. Generally, the radio frequency unit 701 includes but is not limited to an antenna, at least one amplifier, a transceiver, a coupler, a low noise amplifier, a duplexer, and the like. In addition, the radio frequency unit 701 may further communicate with a network and another device through a wireless communications system.

The terminal provides wireless broadband internet access for a user by using the network module 702, for example, helps the user send and receive e-mails, browse web pages, and access streaming media.

The audio output unit 703 may convert audio data received by the radio frequency unit 701 or the network module 702 or stored in the memory 709 into an audio signal and output the audio signal as a sound. In addition, the audio output unit 703 may further provide audio output (for example, a call signal received sound or a message received sound) related to a specific function performed by the terminal 700. The audio output unit 703 includes a speaker, a buzzer, a phone receiver, and the like.

The input unit 704 is configured to receive an audio or video signal. The input unit 704 may include a graphics processing unit (Graphics Processing Unit, GPU) 7041 and a microphone 7042, and the graphics processing unit 7041 processes image data of a still picture or a video obtained by an image capture apparatus (for example, a camera) in an image capture mode or a video capture mode. A processed image frame may be displayed on the display unit 706. An image frame processed by the graphics processing unit 7041 may be stored in the memory 709 (or another storage medium) or transmitted by the radio frequency unit 701 or the network module 702. The microphone 7042 can receive a sound and can process the sound into audio data. The processed audio data can be converted, for outputting, into a format that can be transmitted to a mobile communication base station through the radio frequency unit 701 in a telephone call mode.

The terminal 700 further includes at least one sensor 705, for example, an optical sensor, a motion sensor, and another sensor. Specifically, the optical sensor includes an ambient light sensor and a proximity sensor. The ambient light sensor may adjust brightness of a display panel 7061 based on intensity of ambient light. When the terminal 700 moves near an ear, the proximity sensor may disable the display panel 7061 and/or backlight. As a motion sensor, an accelerometer sensor may detect for a value of an acceleration in various directions (there are usually three axes), may detect for a value and a direction of gravity when the terminal is static, and may be configured to recognize a posture of the terminal (for example, landscape/portrait mode switching, a related game, or magnetometer posture calibration), provide a function related to vibration recognition (for example, a pedometer or a keystroke), or the like. The sensor 705 may further include a fingerprint sensor, a pressure sensor, an iris sensor, a molecular sensor, a gyroscope, a barometer, a hygrometer, a thermometer, or an infrared sensor. Details are not described herein.

The display unit 706 is configured to display information input by the user or information provided for the user. The display unit 706 may include a display panel 7061, and the display panel 7061 may be configured in the form of a liquid crystal display (Liquid Crystal Display, LCD), an organic light-emitting diode (Organic Light-Emitting Diode, OLED), or the like.

The user input unit 707 may be configured to receive input digit or character information, and generate a key signal input related to a user setting and function control of the terminal. Specifically, the user input unit 707 includes a touch panel 7071 and other input devices 7072. The touch panel 7071 is also referred to as a touchscreen, and may collect a touch operation of the user on or near the touch panel (for example, an operation performed on or near the touch panel 7071 by the user by using any appropriate object or accessory such as a finger or a stylus). The touch panel 7071 may include two parts: a touch detection apparatus and a touch controller. The touch detection apparatus detects a touch direction of the user, detects a signal carried by a touch operation, and transmits the signal to the touch controller. The touch controller receives touch information from the touch detection apparatus, converts the touch information to point coordinates, and transmits the point coordinates to the processor 710, and receives and executes a command transmitted by the processor 710. In addition, the touch panel 7071 may be implemented in a plurality of forms, for example, as a resistive, capacitive, infrared, or surface acoustic wave touch panel. The user input unit 707 may further include other input devices 7072 in addition to the touch panel 7071. Specifically, the other input devices 7072 may include but are not limited to a physical keyboard, a function key (such as a volume control key or a power on/off key), a trackball, a mouse, a joystick, and the like. Details are not described herein.

Further, the touch panel 7071 may cover the display panel 7061. After detecting a touch operation on or near the touch panel 7071, the touch panel 7071 transmits the touch operation to the processor 710 to determine a type of a touch event. Then the processor 710 provides corresponding visual output on the display panel 7061 based on the type of the touch event. In FIG. 7, the touch panel 7071 and the display panel 7061 serve as two independent components to implement input and output functions of the terminal. However, in some embodiments, the touch panel 7071 and the display panel 7061 may be integrated to implement the input and output functions of the terminal. This is not specifically limited herein.

The interface unit 708 is an interface for connecting an external apparatus to the terminal 700. For example, the external apparatus may include a wired or wireless headphone port, an external power (or battery charger) port, a wired or wireless data port, a memory card port, a port for connecting an apparatus having a recognition module, an audio input/output (I/O) port, a video I/O port, an earphone port, and the like. The interface unit 708 may be configured to receive input (for example, data information and electric power) from the external apparatus, and transmit the received input to one or more elements in the terminal 700; or may be configured to transmit data between the terminal 700 and the external apparatus.

The memory 709 may be configured to store a software program and various data. The memory 709 may mainly include a program storage area and a data storage area. The program storage area may store an operating system, an application program required for at least one function (such as a sound play function and an image play function), and the like. The data storage area may store data (such as audio data and a phone book) created based on use of a mobile phone, and the like. In addition, the memory 709 may include a high-speed random access memory, or may include a non-volatile memory, for example, at least one magnetic disk storage device, a flash memory device, or other volatile solid-state storage devices.

The processor 710 is a control center of the terminal, connects various parts of the entire terminal by using various interfaces and lines, and executes various functions and data processing of the terminal by running or executing a software program and/or a module stored in the memory 709 and invoking data stored in the memory 709, so as to perform overall monitoring on the terminal. The processor 710 may include one or more processing units. Optionally, the processor 710 may integrate an application processor and a modem processor. The application processor mainly processes an operating system, a user interface, an application program, and the like. The modem processor mainly processes wireless communication. It may be understood that the modem processor may alternatively not be integrated into the processor 710.

The terminal 700 may further include a power supply 711 (for example, a battery) that supplies power to each component. Optionally, the power supply 711 may be logically connected to the processor 710 by using a power management system, so as to implement functions such as charging management, discharging management, and power consumption management by using the power management system.

In addition, the terminal 700 includes some functional modules that are not shown. Details are not described herein.

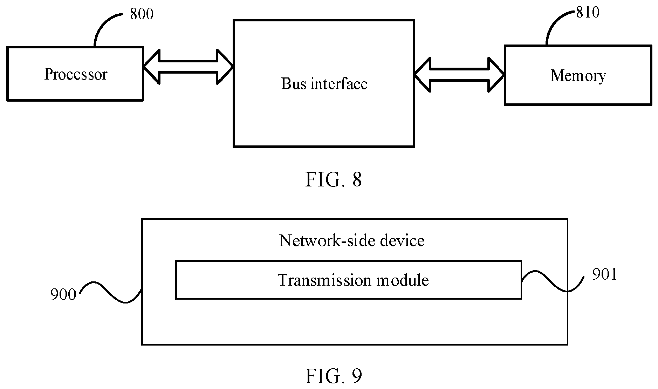

Optionally, as shown in FIG. 8, an embodiment of this disclosure further provides a terminal, including: a processor 800, a memory 810, and a computer program that is stored in the memory 810 and capable of running on the processor 800. When the computer program is executed by the processor 800, processes in the foregoing embodiments of the information receiving method are implemented, with the same technical effects achieved. To avoid repetition, details are not described herein again.

An embodiment of this disclosure further provides a computer-readable storage medium, where the computer-readable storage medium stores a computer program, and when the computer program is executed by a processor, processes of the foregoing embodiments of the information receiving method are implemented, with the same technical effects achieved. To avoid repetition, details are not described herein again. For example, the computer-readable storage medium is a read-only memory (Read-Only Memory, ROM for short), a random access memory (Random Access Memory, RAM for short), a magnetic disk, an optical disc, or the like.

As shown in FIG. 9, an embodiment of this disclosure further provides a network-side device 900, including:
a transmission module 901, configured to transmit target downlink information within a preset monitoring occasion for the target downlink information.

Optionally, in the foregoing embodiment of this disclosure, the target downlink information carries identification information of a terminal to which the target downlink information is specific.

Optionally, in the foregoing embodiment of this disclosure, the network-side device further includes:
a first configuration module, configured to: configure reception configuration information for the target downlink information for the terminal, where the reception configuration information for the target downlink information includes at least: indication information that indicates the preset monitoring occasion for the target downlink information.

Optionally, in the foregoing embodiment of this disclosure, the reception configuration information for the target downlink information further includes a receiving period for the target downlink information and/or reception resource configuration information for the target downlink information.

Optionally, in the foregoing embodiment of this disclosure, when the reception configuration information for the target downlink information includes the reception resource configuration information for the target downlink information,
the reception resource configuration information for the target downlink information includes:
one or more reference signal identifiers; and
reception resource configuration information associated with each reference signal identifier.

Optionally, in the foregoing embodiment of this disclosure, the network-side device further includes:
a second configuration module, configured to: configure a value of a parameter n for a terminal.

Optionally, in the foregoing embodiment of this disclosure, the target downlink information includes at least one of the following information:
a paging message, system information, and discontinuous reception DRX information.

To sum up, in the foregoing embodiment of this disclosure, the network-side device transmits the target downlink information within the preset monitoring occasion for the target downlink information, and configures the reception configuration information for the target downlink information for the terminal, thereby improving efficiency of monitoring the target downlink information by the terminal.

It should be noted that the network-side device provided in this embodiment of this disclosure is a network-side device capable of executing the foregoing information transmission method, and all embodiments of the foregoing information transmission method are applicable to the network-side device, with the same or similar beneficial effects achieved.

Optionally, an embodiment of this disclosure further provides a network-side device, including a processor, a memory, and a computer program stored in the memory and capable of running on the processor. When the computer program is executed by the processor, processes in the foregoing embodiments of the information transmission method are implemented, with the same technical effects achieved. To avoid repetition, details are not described herein again.

An embodiment of this disclosure further provides a computer-readable storage medium, where the computer-readable storage medium stores a computer program, and when the computer program is executed by a processor, processes of the foregoing embodiments of the information transmission method are implemented, with the same technical effects achieved. To avoid repetition, details are not described herein again. For example, the computer-readable storage medium is a read-only memory (Read-Only Memory, ROM for short), a random access memory (Random Access Memory, RAM for short), a magnetic disk, an optical disc, or the like.

It should be noted that the terms "include", "comprise", or any of their variants are intended to cover a non-exclusive inclusion, such that a process, a method, an article, or an apparatus that includes a list of elements not only includes those elements but also includes other elements that are not expressly listed, or further includes elements inherent to such process, method, article, or apparatus. In absence of more constraints, an element preceded by "includes a ..." does not preclude existence of other identical elements in the process, method, article, or apparatus that includes the element.

According to the foregoing description of the implementation manners, a person skilled in the art may clearly understand that the foregoing embodiments may be implemented by using software in combination with a necessary common hardware platform, and certainly may alternatively be implemented by using hardware. However, in most cases, the former is a preferred implementation manner. Based on such an understanding, the technical solutions of this disclosure essentially or a part thereof that contributes to related technologies may be embodied in a form of a software product. The computer software product is stored in a storage medium (for example, a ROM/RAM, a magnetic disk, or an optical disc), and includes several instructions for instructing a terminal (which may be a mobile phone, a computer, a server, an air conditioner, a network device, or the like) to perform the methods described in the embodiments of this disclosure. Electronic hardware includes but is not limited to electronic circuits, application specific integrated circuits, programmable logic devices, programmable processors, and the like.

The foregoing descriptions are only specific implementations of this disclosure, but are not intended to limit the protection scope of this disclosure. Any variation or replacement readily figured out by a person skilled in the art within the technical scope disclosed in this disclosure shall fall within the protection scope of this disclosure. Therefore, the protection scope of this disclosure shall be subject to the protection scope of the claims.

## Claims

1. An information receiving method, applied to a target terminal and the method comprising:
monitoring (201) target downlink information within a preset monitoring occasion for the target downlink information; and
determining that target downlink information specific to the target terminal is absent within the preset monitoring occasion, stopping (202), before an end time of the preset monitoring occasion, monitoring the target downlink information within the preset monitoring occasion, wherein the target downlink information is a paging message;
wherein the determining that target downlink information specific to the target terminal is absent within the preset monitoring occasion comprises:
determining, if an identity of the target terminal is not carried in n pieces of target downlink information that are detected within the preset monitoring occasion, that target downlink information specific to the target terminal is absent within the preset monitoring occasion, wherein n is an integer greater than or equal to 1; or,
if transmission indication information and scheduling information for the target downlink information are detected within the preset monitoring occasion before the target downlink information is detected, and the target downlink information is not scheduled by the scheduling information for the target downlink information, determining that target downlink information specific to the target terminal is absent within the preset monitoring occasion.

2. The method according to claim 1, further comprising:
determining the preset monitoring occasion for the target downlink information based on reception configuration information for the target downlink information, wherein the reception configuration information for the target downlink information is configured by a network-side device or specified by the protocol.

3. The method according to claim 2, wherein the reception configuration information for the target downlink information further comprises a receiving period for the target downlink information, and/or, reception resource configuration information for the target downlink information.

4. The method according to claim 3, wherein when the reception configuration information for the target downlink information comprises the reception resource configuration information for the target downlink information, the reception resource configuration information for the target downlink information comprises:
one or more reference signal identifiers; and
reception resource configuration information associated with each reference signal identifier.

5. The method according to claim 1, wherein the determining, if the identity of the target terminal is not carried in n pieces of target downlink information that are detected within the preset monitoring occasion, that target downlink information specific to the target terminal is absent within the preset monitoring occasion comprises:
if the identity of the target terminal is not carried in n pieces of target downlink information that are detected on resources associated with each of at least one reference signal identifier within the preset monitoring occasion, determining that target downlink information specific to the target terminal is absent within the preset monitoring occasion; or
if the identity of the target terminal is not carried in n pieces of target downlink information that are detected on resources associated with each reference signal identifier within the preset monitoring occasion, determining that target downlink information specific to the target terminal is absent within the preset monitoring occasion; or
if the identity of the target terminal is not carried in n pieces of target downlink information that are detected on resources corresponding to a plurality of reference signal identifiers within the preset monitoring occasion, determining that target downlink information specific to the target terminal is absent within the preset monitoring occasion.

6. The method according to claim 5, wherein values of n for the reception resources associated with different reference signal identifiers are the same or different.

7. A terminal (600), the terminal (600) is a target terminal, and comprises:
a monitoring module (601), configured to monitor target downlink information within a preset monitoring occasion for the target downlink information; and
a stopping module (602), configured to: determine that target downlink information specific to the target terminal is absent within the preset monitoring occasion, stop, before an end time of the preset monitoring occasion, monitoring the target downlink information within the preset monitoring occasion, wherein the target downlink information is a paging message;
wherein the terminal (600) further comprises:
a first determining module, configured to: if an identity of the target terminal is not carried in n pieces of target downlink information that are detected within the preset monitoring occasion, determine that target downlink information specific to the target terminal is absent within the preset monitoring occasion, wherein n is an integer greater than or equal to 1; or,
a second determining module, configured to: if transmission indication information and scheduling information for the target downlink information are detected within the preset monitoring occasion before the target downlink information is detected, and the target downlink information is not scheduled by the scheduling information for the target downlink information, determine that target downlink information specific to the target terminal is absent within the preset monitoring occasion.

8. The terminal (600) according to claim 7, further comprising:
an interval determining module, configured to determine the preset monitoring occasion for the target downlink information based on reception configuration information for the target downlink information, wherein the reception configuration information for the target downlink information is configured by a network-side device or specified by the protocol.

9. The terminal (600) according to claim 8, wherein the reception configuration information for the target downlink information further comprises a receiving period for the target downlink information and/or reception resource configuration information for the target downlink information.

10. The terminal (600) according to claim 9, wherein when the reception configuration information for the target downlink information comprises the reception resource configuration information for the target downlink information,
the reception resource configuration information for the target downlink information comprises:
one or more reference signal identifiers; and
reception resource configuration information associated with each reference signal identifier.

11. The terminal (600) according to claim 7, wherein determining, if the identity of the target terminal is not carried in n pieces of target downlink information that are detected within the preset monitoring occasion, that target downlink information specific to the target terminal is absent within the preset monitoring occasion comprises:
if the identity of the target terminal is not carried in n pieces of target downlink information that are detected on resources associated with each of at least one reference signal identifier within the preset monitoring occasion, determining that target downlink information specific to the target terminal is absent within the preset monitoring occasion; or
if the identity of the target terminal is not carried in n pieces of target downlink information that are detected on resources associated with each reference signal identifier within the preset monitoring occasion, determining that target downlink information specific to the target terminal is absent within the preset monitoring occasion; or
if the identity of the target terminal is not carried in n pieces of target downlink information that are detected on resources corresponding to a plurality of reference signal identifiers within the preset monitoring occasion, determining that target downlink information specific to the target terminal is absent within the preset monitoring occasion.

12. The terminal (600) according to claim 11, wherein values of n for the reception resources associated with different reference signal identifiers are the same or different.

13. A computer-readable storage medium, wherein the computer-readable storage medium stores a computer program, and when the computer program is executed by a processor, the steps of the information receiving method according to any one of claims 1 to 6 are implemented.

## Patentansprüche

1. Verfahren zum Empfangen von Informationen, das auf ein Zielendgerät angewendet wird und die folgenden Schritte umfasst:
Überwachen (201) von Ziel-Downlink-Informationen innerhalb eines voreingestellten Überwachungszeitraums für die Ziel-Downlink-Informationen; und
Bestimmen, dass Ziel-Downlink-Informationen, die für das Zielendgerät spezifisch sind, innerhalb des voreingestellten Überwachungszeitraums fehlen, Beenden (202) des Überwaches von den Ziel-Downlink-Informationen innerhalb des voreingestellten Überwachungszeitraums vor einer Endzeit der voreingestellten Überwachungszeit, wobei die Ziel-Downlink-Informationen eine Paging-Nachricht sind;
wobei das Bestimmen, dass Ziel-Downlink-Informationen, die für das Zielendgerät spezifisch sind, innerhalb des voreingestellten Überwachungszeitraums fehlen, die folgenden Schritte umfasst:
Bestimmen, dass Ziel-Downlink-Informationen, die für das Zielendgerät spezifisch sind, innerhalb des voreingestellten Überwachungszeitraums fehlen, wenn eine Identität des Zielendgeräts nicht in n Stücken von Ziel-Downlink-Informationen enthalten ist, die innerhalb des voreingestellten Überwachungszeitraums erfasst werden, wobei n eine ganze Zahl größer oder gleich 1 ist; oder
wenn Übertragungsanzeigeinformationen und Planungsinformationen für die Ziel-Downlink-Informationen innerhalb des voreingestellten Überwachungszeitraums erfasst werden, bevor die Ziel-Downlink-Informationen erfasst werden, und die Ziel-Downlink-Informationen nicht durch die Planungsinformationen für die Ziel-Downlink-Informationen geplant sind, Bestimmen, dass Ziel-Downlink-Informationen, die für das Zielendgerät spezifisch sind, innerhalb des voreingestellten Überwachungszeitraums fehlen.

2. Verfahren nach Anspruch 1, das ferner den folgenden Schritt umfasst:
Bestimmen des voreingestellten Überwachungszeitraums für die Ziel-Downlink-Informationen auf der Grundlage von Empfangskonfigurationsinformationen für die Ziel-Downlink-Informationen, wobei die Empfangskonfigurationsinformationen für die Ziel-Downlink-Informationen durch eine netzwerkseitige Vorrichtung konfiguriert oder durch das Protokoll spezifiziert werden.

3. Verfahren nach Anspruch 2, wobei die Empfangskonfigurationsinformationen für die Ziel-Downlink-Informationen ferner eine Empfangsperiode für die Ziel-Downlink-Informationen und/oder Empfangsressourcenkonfigurationsinformationen für die Ziel-Downlink-Informationen aufweisen.

4. Verfahren nach Anspruch 3, wobei, wenn die Empfangskonfigurationsinformationen für die Ziel-Downlink-Informationen die Empfangsressourcenkonfigurationsinformationen für die Ziel-Downlink-Informationen aufweisen,
die Empfangsressourcenkonfigurationsinformationen für die Ziel-Downlink-Informationen Folgendes aufweisen:
eine oder mehrere Referenzsignalkennungen; und
Empfangsressourcenkonfigurationsinformationen, die jeder Referenzsignalkennung zugeordnet sind.

5. Verfahren nach Anspruch 1, wobei das Bestimmen, dass Ziel-Downlink-Informationen, die für das Zielendgerät spezifisch sind, innerhalb des voreingestellten Überwachungszeitraums fehlen, wenn eine Identität des Zielendgeräts nicht in n Stücken von Ziel-Downlink-Informationen enthalten ist, die innerhalb des voreingestellten Überwachungszeitraums erfasst werden, die folgenden Schritte umfasst:
wenn die Identität des Zielendgeräts nicht in n Stücken von Ziel-Downlink-Informationen enthalten ist, die auf Ressourcen erfasst werden, die mit mindestens einer Referenzsignalkennung innerhalb des voreingestellten Überwachungszeitraums verbunden sind, Bestimmen, dass Ziel-Downlink-Informationen, die für das Zielendgerät spezifisch sind, innerhalb des voreingestellten Überwachungszeitraums fehlen; oder
wenn die Identität des Zielendgeräts nicht in n Stücken von Ziel-Downlink-Informationen enthalten ist, die auf Ressourcen erfasst werden, die mit jeder Referenzsignalkennung innerhalb des voreingestellten Überwachungszeitraums verbunden sind, Bestimmen, dass Ziel-Downlink-Informationen, die für das Zielendgerät spezifisch sind, innerhalb des voreingestellten Überwachungszeitraums fehlen; oder
wenn die Identität des Zielendgeräts nicht in n Ziel-Downlink-Informationen enthalten ist, die auf Ressourcen erfasst werden, die einer Mehrzahl von Referenzsignalkennungen innerhalb des voreingestellten Überwachungszeitraums entsprechen, Bestimmen dass Ziel-Downlink-Informationen, die für das Zielendgerät spezifisch sind, innerhalb des voreingestellten Überwachungszeitraums fehlen.

6. Verfahren nach Anspruch 5, wobei Werte von n für die Empfangsressourcen, die verschiedenen Referenzsignalkennungen zugeordnet sind, gleich oder unterschiedlich sind.

7. Endgerät (600), wobei das Endgerät (600) ein Zielendgerät ist und Folgendes aufweist:
ein Überwachungsmodul (601), das so konfiguriert ist, dass es Ziel-Downlink-Informationen innerhalb eines voreingestellten Überwachungszeitraums für die Ziel-Downlink-Informationen überwacht; und
ein Beendenmodul (602), das so konfiguriert ist, dass es bestimmt, dass Ziel-Downlink-Informationen, die für das Zielendgerät spezifisch sind, innerhalb des voreingestellten Überwachungszeitraums fehlen, vor einer Endzeit des voreingestellten Überwachungszeitraums die Überwachung der Ziel-Downlink-Informationen innerhalb des voreingestellten Überwachungszeitraums beendet, wobei die Ziel-Downlink-Informationen eine Paging-Nachricht sind;
wobei das Endgerät (600) ferner Folgendes aufweist:
ein erstes Bestimmungsmodul, das so konfiguriert ist, dass es, wenn eine Identität des Zielendgeräts nicht in n Stücken von Ziel-Downlink-Informationen enthalten ist, die innerhalb des voreingestellten Überwachungszeitraums erfasst werden, bestimmt, dass Ziel-Downlink-Informationen, die für das Zielendgerät spezifisch sind, innerhalb des voreingestellten Überwachungszeitraums fehlen, wobei n eine ganze Zahl größer oder gleich 1 ist; oder
ein zweites Bestimmungsmodul, das so konfiguriert ist, dass es, wenn Übertragungsanzeigeinformationen und Planungsinformationen für die Ziel-Downlink-Informationen innerhalb des voreingestellten Überwachungszeitraums erfasst werden, bevor die Ziel-Downlink-Informationen erfasst werden und die Ziel-Downlink-Informationen nicht durch die Planungsinformationen für die Ziel-Downlink-Informationen geplant sind, bestimmt, dass Ziel-Downlink-Informationen, die für das Zielendgerät spezifisch sind, innerhalb des voreingestellten Überwachungszeitraums fehlen.

8. Endgerät (600) nach Anspruch 7, das ferner Folgendes aufweist:
ein Intervallbestimmungsmodul, das so konfiguriert ist, dass es den voreingestellten Überwachungszeitraum für die Ziel-Downlink-Informationen auf der Grundlage von Empfangskonfigurationsinformationen für die Ziel-Downlink-Informationen bestimmt, wobei die Empfangskonfigurationsinformationen für die Ziel-Downlink-Informationen durch ein netzwerkseitige Vorrichtung konfiguriert oder durch das Protokoll spezifiziert werden.

9. Endgerät (600) nach Anspruch 8, wobei die Empfangskonfigurationsinformationen für die Ziel-Downlink-Informationen ferner eine Empfangsperiode für die Ziel-Downlink-Informationen und/oder Empfangsressourcenkonfigurationsinformationen für die Ziel-Downlink-Informationen aufweisen.

10. Endgerät (600) nach Anspruch 9, wobei, wenn die Empfangskonfigurationsinformationen für die Ziel-Downlink-Informationen die Empfangsressourcenkonfigurationsinformationen für die Ziel-Downlink-Informationen aufweisen,
die Empfangsressourcenkonfigurationsinformationen für die Ziel-Downlink-Informationen Folgendes aufweisen:
eine oder mehrere Referenzsignalkennungen; und
Empfangsressourcenkonfigurationsinformationen, die jeder Referenzsignalkennung zugeordnet sind.

11. Endgerät (600) nach Anspruch 7, wobei Bestimmen, dass Ziel-Downlink-Informationen, die für das Zielendgerät spezifisch sind, innerhalb des voreingestellten Übewachungszeitraums fehlen, wenn eine Identität des Zielendgeräts nicht in n Stücken von Ziel-Downlink-Informationen enthalten ist, die innerhalb des voreingestellten Überwachungszeitraums erfasst werden, Folgendes umfasst:
wenn die Identität des Zielendgeräts nicht in n Stücken von Ziel-Downlink-Informationen enthalten ist, die auf Ressourcen erfasst werden, die mit mindestens einem Referenzsignalkennung innerhalb des voreingestellten Überwachungszeitraums verbunden sind, Bestimmen, dass Ziel-Downlink-Informationen, die für das Zielendgerät spezifisch sind, innerhalb des voreingestellten Überwachungszeitraums fehlen; oder
wenn die Identität des Zielendgeräts nicht in n Stücken von Ziel-Downlink-Informationen enthalten ist, die auf Ressourcen erfasst werden, die mit jeder Referenzsignalkennung innerhalb des voreingestellten Überwachungszeitraums verbunden sind, Bestimmen, dass Ziel-Downlink-Informationen, die für das Zielendgerät spezifisch sind, innerhalb des voreingestellten Überwachungszeitraums fehlen; oder
wenn die Identität des Zielendgeräts nicht in n Ziel-Downlink-Informationen enthalten ist, die auf Ressourcen erfasst werden, die einer Mehrzahl von Referenzsignalkennungen innerhalb des voreingestellten Überwachungszeitraums entsprechen, Bestimmen, dass Ziel-Downlink-Informationen, die für das Zielendgerät spezifisch sind, innerhalb des voreingestellten Überwachungszeitraums fehlen.

12. Endgerät (600) nach Anspruch 11, wobei Werte von n für die Empfangsressourcen, die verschiedenen Referenzsignalkennungen zugeordnet sind, gleich oder unterschiedlich sind.

13. Computerlesbares Speichermedium, wobei das computerlesbare Speichermedium ein Computerprogramm speichert und bei Ausführung des Computerprogramms durch einen Prozessor die Schritte des Verfahrens zum Empfangen von Informationen nach einem der Ansprüche 1 bis 6 implementiert werden.

## Revendications

1. Procédé de réception d'informations, appliqué à un terminal cible, et le procédé comprenant :
la surveillance (201) d'informations de liaison descendante cibles au cours d'une occasion de surveillance prédéfinie pour les informations de liaison descendante cibles ; et
la détermination de l'absence d'informations de liaison descendante cibles spécifiques au terminal cible au cours de l'occasion de surveillance prédéfinie, l'arrêt (202), avant un temps de fin de l'occasion de surveillance prédéfinie, de la surveillance des informations de liaison descendante cibles au cours de l'occasion de surveillance prédéfinie, dans lequel les informations de liaison descendante cibles sont un message de recherche ;
dans lequel la détermination de l'absence d'informations de liaison descendante cibles spécifiques au terminal cible au cours de l'occasion de surveillance prédéfinie comprend :
la détermination, si une identité du terminal cible n'est pas transportée dans n informations de liaison descendante cibles qui sont détectées au cours de l'occasion de surveillance prédéfinie, de l'absence d'informations de liaison descendante cibles spécifiques au terminal cible au cours de l'occasion de surveillance prédéfinie, dans lequel n est un entier supérieur ou égal à 1 ; ou,
si des informations d'indication de transmission et des informations de planification pour les informations de liaison descendante cibles sont détectées au cours de l'occasion de surveillance prédéfinie avant que les informations de liaison descendante cibles ne soient détectées, et les informations de liaison descendante cibles ne sont pas planifiées par les informations de planification pour les informations de liaison descendante cibles, la détermination de l'absence d'informations de liaison descendante cibles spécifiques au terminal cible au cours de l'occasion de surveillance prédéfinie.

2. Procédé selon la revendication 1, comprenant en outre :
la détermination de l'occasion de surveillance prédéfinie pour les informations de liaison descendante cibles sur la base d'informations de configuration de réception pour les informations de liaison descendante cibles, dans lequel les informations de configuration de réception pour les informations de liaison descendante cibles sont configurées par un dispositif côté réseau ou spécifiées par le protocole.

3. Procédé selon la revendication 2, dans lequel les informations de configuration de réception pour les informations de liaison descendante cibles comprennent en outre une période de réception pour les informations de liaison descendante cibles, et/ou des informations de configuration de ressources de réception pour les informations de liaison descendante cibles.

4. Procédé selon la revendication 3, dans lequel lorsque les informations de configuration de réception pour les informations de liaison descendante cibles comprennent les informations de configuration de ressources de réception pour les informations de liaison descendante cibles,
les informations de configuration de ressources de réception pour les informations de liaison descendante cible comprennent :
un ou plusieurs identifiants de signal de référence ; et
des informations de configuration de ressources de réception associées à chaque identifiant de signal de référence.

5. Procédé selon la revendication 1, dans lequel la détermination, si l'identité du terminal cible n'est pas transportée dans n informations de liaison descendante cibles qui sont détectées au cours de l'occasion de surveillance prédéfinie, de l'absence d'informations de liaison descendante cibles spécifiques au terminal cible au cours de l'occasion de surveillance prédéfinie comprend :
si l'identité du terminal cible n'est pas transportée dans n informations de liaison descendante cibles qui sont détectées sur des ressources associées à chacun d'au moins un identifiant de signal de référence au cours de l'occasion de surveillance prédéfinie, la détermination de l'absence d'informations de liaison descendante cibles spécifiques au terminal cible au cours de l'occasion de surveillance prédéfinie ; ou
si l'identité du terminal cible n'est pas transportée dans n informations de liaison descendante cibles qui sont détectées sur des ressources associées à chaque identifiant de signal de référence au cours de l'occasion de surveillance prédéfinie, la détermination de l'absence d'informations de liaison descendante cibles spécifiques au terminal cible au cours de l'occasion de surveillance prédéfinie ; ou
si l'identité du terminal cible n'est pas transportée dans n informations de liaison descendante cibles qui sont détectées sur des ressources correspondant à une pluralité d'identifiants de signal de référence au cours de l'occasion de surveillance prédéfinie, la détermination de l'absence d'informations de liaison descendante cibles spécifiques au terminal cible au cours de l'occasion de surveillance prédéfinie.

6. Procédé selon la revendication 5, dans lequel les valeurs de n pour les ressources de réception associées à différents identifiants de signal de référence sont identiques ou différentes.

7. Terminal (600), le terminal (600) est un terminal cible et comprend :
un module de surveillance (601), configuré pour surveiller des informations de liaison descendante cibles au cours d'une occasion de surveillance prédéfinie pour les informations de liaison descendante cibles ; et
un module d'arrêt (602), configuré pour : déterminer que des informations de liaison descendante cibles spécifiques au terminal cible sont absentes au cours de l'occasion de surveillance prédéfinie, arrêter, avant un temps de fin de l'occasion de surveillance prédéfinie, la surveillance des informations de liaison descendante cibles au cours de l'occasion de surveillance prédéfinie, dans lequel les informations de liaison descendante cibles sont un message de recherche ;
dans lequel le terminal (600) comprend en outre :
un premier module de détermination, configuré pour : si une identité du terminal cible n'est pas transportée dans n informations de liaison descendante cibles qui sont détectées au cours de l'occasion de surveillance prédéfinie, déterminer que des informations de liaison descendante cibles spécifiques au terminal cible sont absentes au cours de l'occasion de surveillance prédéfinie, dans lequel n est un entier supérieur ou égal à 1 ; ou,
un second module de détermination, configuré pour : si des informations d'indication de transmission et des informations de planification pour les informations de liaison descendante cibles sont détectées au cours de l'occasion de surveillance prédéfinie avant que les informations de liaison descendante cibles ne soient détectées, et les informations de liaison descendante cibles ne sont pas planifiées par les informations de planification pour les informations de liaison descendante cibles, déterminer que des informations de liaison descendante cibles spécifiques au terminal cible sont absentes au cours de l'occasion de surveillance prédéfinie.

8. Terminal (600) selon la revendication 7, comprenant en outre :
un module de détermination d'intervalle, configuré pour déterminer l'occasion de surveillance prédéfinie pour les informations de liaison descendante cibles sur la base d'informations de configuration de réception pour les informations de liaison descendante cibles, dans lequel les informations de configuration de réception pour les informations de liaison descendante cibles sont configurées par un dispositif côté réseau ou spécifiées par le protocole.

9. Terminal (600) selon la revendication 8, dans lequel les informations de configuration de réception pour les informations de liaison descendante cibles comprennent en outre une période de réception pour les informations de liaison descendante cibles, et/ou des informations de configuration de ressources de réception pour les informations de liaison descendante cibles.

10. Terminal (600) selon la revendication 9, dans lequel lorsque les informations de configuration de réception pour les informations de liaison descendante cibles comprennent les informations de configuration de ressources de réception pour les informations de liaison descendante cibles,
les informations de configuration de ressources de réception pour les informations de liaison descendante cible comprennent :
un ou plusieurs identifiants de signal de référence ; et
des informations de configuration de ressources de réception associées à chaque identifiant de signal de référence.

11. Terminal (600) selon la revendication 7, dans lequel la détermination, si l'identité du terminal cible n'est pas transportée dans n informations de liaison descendante cibles qui sont détectées au cours de l'occasion de surveillance prédéfinie, de l'absence d'informations de liaison descendante cibles spécifiques au terminal cible au cours de l'occasion de surveillance prédéfinie comprend :
si l'identité du terminal cible n'est pas transportée dans n informations de liaison descendante cibles qui sont détectées sur des ressources associées à chacun d'au moins un identifiant de signal de référence au cours de l'occasion de surveillance prédéfinie, la détermination de l'absence d'informations de liaison descendante cibles spécifiques au terminal cible au cours de l'occasion de surveillance prédéfinie ; ou
si l'identité du terminal cible n'est pas transportée dans n informations de liaison descendante cibles qui sont détectées sur des ressources associées à chaque identifiant de signal de référence au cours de l'occasion de surveillance prédéfinie, la détermination de l'absence d'informations de liaison descendante cibles spécifiques au terminal cible au cours de l'occasion de surveillance prédéfinie ; ou
si l'identité du terminal cible n'est pas transportée dans n informations de liaison descendante cibles qui sont détectées sur des ressources correspondant à une pluralité d'identifiants de signal de référence au cours de l'occasion de surveillance prédéfinie, la détermination de l'absence d'informations de liaison descendante cibles spécifiques au terminal cible au cours de l'occasion de surveillance prédéfinie.

12. Terminal (600) selon la revendication 11, dans lequel les valeurs de n pour les ressources de réception associées à différents identifiants de signal de référence sont identiques ou différentes.

13. Support de stockage lisible par ordinateur, dans lequel le support de stockage lisible par ordinateur stocke un programme informatique, et lorsque le programme informatique est exécuté par un processeur, les étapes du procédé de réception d'informations selon l'une quelconque des revendications 1 à 6 sont mises en œuvre.
